# FASCICULE DE BREVET EUROPEEN

(11) **EP 3 548 313 B1**
(45) Date de publication et mention de la délivrance du brevet: **20.07.2022**
(21) Numéro de dépôt: 17817798.6
(22) Date de dépôt: 30.11.2017
(51) Int. Cl.: B60C 23/04, G06K 19/077, H01Q 1/22, B60C 19/00

(54) **ENVELOPPE PNEUMATIQUE ÉQUIPÉE D'UN ORGANE ÉLECTRONIQUE**
MIT EINEM ELEKTRONISCHEN ELEMENT AUSGESTATTETER LUFTREIFEN
PNEUMATIC TYRE EQUIPPED WITH AN ELECTRONIC MEMBER

(30) Priorité: 05.12.2016 FR 1661924
(43) Date de publication de la demande: 09.10.2019
(73) Titulaire: Compagnie Générale des Etablissements Michelin, 63000 Clermont-Ferrand (FR)
(72) Inventeur: DESTRAVES, Julien, 63040 Clermont-Ferrand Cedex 9 (FR); TOURENNE, Annabel, 63040 Clermont-Ferrand Cedex 9 (FR); NOEL, Sebastien, 63040 Clermont-Ferrand Cedex 9 (FR); CLERGEAT, Jean-Mathieu, 63040 Clermont-Ferrand Cedex 9 (FR); ALDON, Isabelle, 63040 Clermont-Ferrand (FR)
(74) Mandataire: Roussy, Delphine
(86) Numéro de dépôt international: PCT/FR2017/053317
(87) Numéro de publication internationale: WO 2018/104619

(56) Documents cités:
- EP-A1- 1 977 912
- EP-A2- 2 524 818
- WO-A1-2016/193457
- DE-A1-102007 043 077

## Description

### Domaine de l'invention

La présente invention concerne une enveloppe pneumatique équipée d'un organe électronique communiquant avec des dispositifs radiofréquences externes à l'enveloppe pneumatique.

### Arrière-plan technologique

Le développement d'organes électroniques intégrés à des ensembles montés, comprenant une enveloppe pneumatique et une roue, s'est accru ces dernières années. En effet, ces organes électroniques comme par exemple les transpondeurs radiofréquences ou les tags RFID (acronyme en anglais de Radio Frequency IDentification) contiennent des informations sur l'ensemble monté comme l'identifiant de l'enveloppe pneumatique, ses dimensions caractéristiques, etc. qui sont des données cruciales dans la gestion et le stockage de tels articles. De plus ces organes électroniques peuvent aussi mesurer des paramètres de l'ensemble monté comme par exemple la température à l'intérieure de la cavité formée par l'enveloppe pneumatique et la jante de roue dans un état monté, gonflé. Certains paramètres sont essentiels à un usage sécuritaire de l'ensemble monté. La communication avec ces organes électroniques notamment pour la communication des paramètres de l'ensemble monté se fait généralement par le biais d'une transmission radiofréquence vers des dispositifs émetteurs/récepteurs externes.

L'intégration de tels organes électroniques au sein de l'ensemble monté et en particulier de l'enveloppe pneumatique n'est pas simple. En effet, afin d'assurer une fiabilité des informations contenues dans ces organes électroniques et notamment celles concernant l'identifiant de l'enveloppe pneumatique tout au long du cycle du produit, il est préférable que l'organe électronique soit solidaire de l'enveloppe pneumatique pour laquelle il contient des informations d'identification. L'intégration de tels organes électroniques au sein de la structure d'une enveloppe pneumatique pose un certain nombre de défis. En premier, l'insertion d'un organe électronique au sein de la structure du pneumatique peut engendrer des déchéances de l'enveloppe pneumatique, il faut donc s'assurer de l'intégrité physique de l'enveloppe pneumatique tout au long de son cycle de vie. Le second concerne la performance de radiocommunication de l'organe électronique. En effet, la structure complexe d'un ensemble monté avec, en particulier, ses empilages de mélanges caoutchouteux de permittivités différentes ainsi que ses éléments métalliques génèrent des perturbations dans le fonctionnement radiofréquence de l'antenne de l'organe électronique en particulier dans la bande de fréquences UHF (acronyme d'Ultra Hautes Fréquences). Enfin, le troisième défi consiste à s'assurer de l'intégrité physique de l'organe électronique lui-même tout au long du cycle de vie de l'enveloppe pneumatique et notamment en raison des fortes sollicitations thermomécaniques subies par l'enveloppe pneumatique en condition de roulage.

Le document EP1977912 A1 décrit une position privilégiée d'un organe électronique communiquant par radiofréquence au sein d'une architecture d'enveloppe pneumatique afin d'améliorer le compromis de performance entre la qualité de radiocommunication de l'organe électronique et l'intégrité physique à la fois de l'enveloppe pneumatique et de l'organe électronique. Cependant, en raison des contraintes liées à l'intégrité structurelle de l'organe électronique soumis aux sollicitations thermomécaniques générées par le roulage de l'enveloppe pneumatique, la position identifiée, bien que correspondant au meilleur compromis, n'est pas optimale en terme de radiocommunication.

Le document DE102007043077 A1 décrit un transpondeur radiofréquence avec une antenne rayonnante constituée d'un ressort hélicoïdal monobrin.

L'invention a pour but d'identifier les positions optimales d'intégration dans l'enveloppe pneumatique d'un organe électronique, comme un transpondeur radiofréquence, vis-à-vis de son intégrité physique sans nuire à sa performance de radiocommunication, en particulier dans la bande UHF, ni à l'endurance de l'enveloppe pneumatique. Bien entendu, il convient de ne pas non plus devoir modifier les principales étapes de fabrication de l'enveloppe pneumatique ni son architecture.

### Description de l'invention

L'invention porte sur une enveloppe pneumatique équipée d'un organe électronique et comportant un sommet, deux flancs et deux bourrelets de révolution autour d'un axe de référence Cette enveloppe pneumatique comporte aussi des premiers fils formant des allers et retours disposés de façon adjacente, alignés circonférentiellement, ancrés dans les deux bourrelets. Au niveau de chaque bourrelet, des boucles relient chaque fois un aller à un retour. Dans chaque bourrelet des moyens d'ancrage des premiers fils comprenant des seconds fils orientés circonférentiellement bordant axialement les premiers fils forment une spirale. Les dits premiers fils forment un alignement circonférentiel définissant la nappe carcasse séparant l'enveloppe pneumatique en deux zones intérieure et extérieure par rapport à la nappe carcasse. L'organe électronique comprenant au moins une puce électronique et une antenne rayonnante de radiocommunication est disposé radialement extérieurement relativement à la spirale. L'enveloppe pneumatique est caractérisée en ce que l'organe électronique comprend une antenne primaire connectée électriquement à la puce électronique, en ce que l'antenne primaire est couplée électromagnétiquement à l'antenne rayonnante et en ce que l'antenne rayonnante est constituée d'un ressort hélicoïdal monobrin définissant un premier axe longitudinal.

Ainsi, l'intégration d'un tel organe électronique permet à la fois de réduire les risques de détérioration de l'organe électronique de par sa structure tout en améliorant la performance de radiocommunication de l'organe électronique et en minimisant les risques liés à l'intégrité physique de l'enveloppe pneumatique.

En effet, la détérioration de l'organe électronique provient généralement de défaillances au niveau des connexions existantes entre l'antenne de communication et la partie électronique de l'organe. Ici aucune connexion mécanique n'est réalisée puisque le transfert d'énergie entre l'antenne de communication et la puce électronique est fait par champ électromagnétique via une antenne primaire. Or, si la dimension de l'antenne rayonnante, liée à la bande de fréquence de communication et à son fonctionnement en champ lointain, est par nature de grande dimension, l'antenne primaire n'est pas soumise à cette contrainte. De ce fait, elle est de plus petite taille en général permettant de supporter aisément les déformations de l'enveloppe pneumatique sans générer de trop fortes contraintes mécaniques au sein de sa jonction électrique avec la puce électronique. Enfin l'incorporation de l'organe électronique au sein de différents constituants de l'enveloppe pneumatique protège l'organe électronique vis-à-vis de sollicitations externes à l'ensemble monté en roulage ou lors du montage de l'enveloppe pneumatique sur la roue pour former l'ensemble monté.

En second lieu, l'introduction de l'antenne primaire permet de dissocier des fonctions antagonistes entre dimension de l'antenne rayonnante et impédance électrique de la partie électronique de l'organe. Ainsi, il est possible de dimensionner l'antenne primaire afin d'adapter son impédance électrique à la puce pour minimiser les pertes et améliorer de ce fait la performance énergétique de l'organe électronique. Le dimensionnement de l'antenne rayonnante suit alors le seul critère de la fréquence de communication de l'organe électronique. L'ensemble tend à améliorer la performance de radiocommunication de l'organe électronique.

De plus, le positionnement de l'organe électronique dans une enveloppe pneumatique loin de la roue de l'ensemble monté et de la spirale métallique servant de moyen d'ancrage de la nappe carcasse, minimise les perturbations radiofréquences de communication de l'organe électronique.

En particulier la fréquence de communication de l'organe électronique est située dans la bande des UHF (acronyme de Ultra Hautes Fréquences) comprise entre 300MHz et 3GHz permettant d'avoir un compromis avantageux entre une petite taille de l'antenne rayonnante, facilement intégrable à une enveloppe pneumatique, et une grande distance de lecture de l'organe électronique, loin de l'enveloppe pneumatique. De façon avantageuse, l'organe électronique communique dans la bande étroite de fréquences comprise entre 860 MHz et 960 Mhz et tout spécifiquement sur des bandes très étroites de 860 MHz à 870 MHz et 915 MHz à 925 MHz. En effet, à ces fréquences, les mélanges élastomères classiques de l'enveloppe pneumatique constituent un bon compromis à la propagation des ondes radioélectriques. De plus, ces fréquences sont les plus élevées possibles pour minimiser la taille de l'antenne rayonnante afin de faciliter l'intégration de l'organe électronique dans l'enveloppe pneumatique.

Selon l'invention, l'antenne primaire est une bobine ayant au moins une spire définissant un deuxième axe longitudinal qui est circonscrite dans un cylindre. L'axe de révolution du cylindre est parallèle au deuxième axe longitudinal et le diamètre est compris entre le tiers et trois fois, de préférence entre la moitié et deux fois, le diamètre moyen du ressort hélicoïdal de l'antenne rayonnante.

Ainsi, l'antenne primaire étant une antenne boucle, le transfert d'énergie entre l'antenne rayonnante et l'antenne primaire est principalement réalisé par couplage inductif. Cela impose alors une certaine proximité (pour limiter l'entrefer entre les deux antennes) entre les deux antennes nécessitant un dimensionnement de la bobine de l'antenne primaire par rapport à l'antenne rayonnante pour assurer une efficacité de transfert d'énergie suffisante en minimisant l'entrefer entre les deux bobines pour obtenir la qualité de radiocommunication souhaitée.

Concrètement, l'antenne primaire peut avantageusement être de diamètre inférieur à celui de l'antenne rayonnante, dans ce cas l'ensemble de la partie électronique du transpondeur est insérée dans l'antenne rayonnante et l'ensemble est particulièrement robuste dans un environnement tel que celui d'un pneumatique.

L'antenne peut aussi être de diamètre supérieur à celui de l'antenne rayonnante, ce cas est particulièrement avantageux lorsque l'on souhaite ajouter au transpondeur radiofréquence d'autres composants électroniques, actifs ou passifs, pour réaliser des fonctions complémentaires, par exemple de surveillance de l'état du pneumatique.

Selon un mode de réalisation privilégié, l'antenne rayonnante ayant une zone centrale entre deux zones latérales et l'antenne primaire ayant un plan médian perpendiculaire au deuxième axe longitudinal, les premier et deuxième axes longitudinaux sont parallèles entre eux et le plan médian de l'antenne primaire est disposé dans la zone centrale de l'antenne rayonnante.

On entend ici par le terme « zone centrale », le cylindre défini par le diamètre intérieur du ressort hélicoïdal situé de part et d'autre du plan médian du ressort hélicoïdal et dont la hauteur correspond à 25 % de la longueur du ressort hélicoïdal, de préférence 15 % de la longueur du ressort hélicoïdal.

Ainsi on assure à la fois que la distance entre les antennes rayonnante et primaire est constante le long des axes longitudinaux de ces antennes optimisant ainsi au niveau de chaque élément de longueur de l'antenne primaire un transfert d'énergie équivalent. De plus, le champ magnétique crée par une bobine parcourue par un courant électrique étant maximal dans la zone centrale de la bobine, il est préférable de positionner le plan médian de l'antenne primaire dans cette zone centrale de l'antenne rayonnante pour maximiser le champ magnétique à l'origine du couplage électromagnétique.

Selon un mode de réalisation particulier, le premier axe longitudinal de l'organe électronique est orienté perpendiculairement relativement aux premiers fils du au moins un alignement circonférentiel.

Ainsi, on assure une meilleure intégrité de l'organe électronique et en particulier de l'antenne rayonnante. Celle-ci peut se trouver en appui sur les premiers fils de l'alignement circonférentiel qui représente l'équivalent d'une nappe de renfort essentielle à la tenue structurelle de l'architecture de l'enveloppe pneumatique. De plus, la forme de l'antenne rayonnante positionnée de telle manière permet de supporter les sollicitations thermomécaniques de l'enveloppe pneumatique en roulage notamment au moment du passage dans l'aire de contact. En particulier l'antenne rayonnante se déforme élastiquement de par sa forme de ressort hélicoïdal au moment de la déradialisation des câblés de la nappe carcasse lors de la traversée de l'aire de contact. De plus, lorsque les premiers fils de l'alignement circonférentiel sont de nature métallique, ceux-ci sont susceptibles de générer des perturbations aux propagations des ondes radioélectriques. Le positionnement de l'antenne rayonnante perpendiculairement aux câbles limite ces perturbations.

Selon un mode de réalisation particulier, l'enveloppe pneumatique comprenant au moins une première masse de gomme annulaire, coaxiale à l'axe de référence, située radialement entre l'axe de référence et l'organe électronique, avec au moins un bord situé dans la zone de l'enveloppe pneumatique où est localisé l'organe électronique, l'organe électronique est éloigné du au moins un bord radialement externe de la première masse de gomme d'au moins 5 mm, de préférence d'au moins 10 mm.

Dans le cas où le module en extension de la première masse de gomme est rigide vis-à-vis d'une autre masse de gomme de l'architecture de l'enveloppe pneumatique qui lui est voisine, l'extrémité de cette première masse de gomme constitue alors une singularité structurelle de l'enveloppe pneumatique. Par exemple cette première masse de gomme est une gomme de bourrage située de façon adjacente au deuxièmes fils de la spirale ou entre les boucles des premiers fils de l'alignement circonférentiel. Toute singularité structurelle est source de concentration de contraintes mécaniques propice à une éventuelle fissuration par fatigue néfaste à l'intégrité de la structure. Ainsi, il est préférable d'éloigner l'organe électronique qui est aussi une singularité structurelle dans l'architecture de l'enveloppe pneumatique pour limiter les trop forts niveaux de contrainte mécanique à ces singularités et préserver l'intégrité structurelle de l'enveloppe pneumatique. Selon la rigidité des masses de gomme à proximité de ce bord libre et de l'organe électronique, il convient de définir le bon éloignement entre les deux singularités.

Selon un mode de réalisation particulier, l'enveloppe pneumatique comprenant des troisièmes fils de renfort disposés de façon adjacente et s'étendant radialement entre un bord radialement interne et un bord radialement externe qui sont situés dans la zone de l'enveloppe pneumatique où se trouve l'organe électronique, pour former un alignement circonférentiel, situés radialement entre l'axe de référence et l'organe électronique, l'organe électronique est éloigné d'un bord radialement externe des troisièmes fils de renfort d'au moins 10 mm, de préférence d'au moins 15 mm.

Ainsi, le bord libre radialement externe des troisièmes fils de renfort représente une singularité mécanique particulièrement propice aux concentrations de contraintes. L'éloignement de l'organe électronique qui représente aussi une singularité mécanique de par sa rigidité limite les concentrations de contraintes dans cette zone. De ce fait, l'endurance mécanique de l'enveloppe pneumatique s'en trouve améliorée. Ceci est particulièrement vrai selon la nature des troisièmes fils de renfort et de leur orientation par rapport au bord libre de l'alignement circonférentiel ce qui nécessite d'ajuster l'éloignement entre les deux singularités.

Selon un mode de réalisation particulier, l'enveloppe pneumatique comprend une deuxième masse de gomme annulaire, coaxiale à l'axe de référence, située radialement extérieurement à l'organe électronique par rapport à l'axe de référence, avec un bord libre dans la zone où se trouve l'organe électronique, l'organe électronique est éloigné du bord libre radialement interne de la deuxième masse de gomme d'au moins 5 mm, de préférence d'au moins 10 mm.

Dans le cas où le module en extension de la deuxième masse de gomme est rigide vis-à-vis d'une autre masse de gomme de l'architecture du pneumatique qui lui est adjacente ou voisine, l'extrémité de cette première masse de gomme constitue alors une singularité structurelle de l'enveloppe pneumatique. Toute singularité structurelle est source de concentration de contraintes mécaniques propice à une éventuelle fissuration par fatigue fortement néfaste à l'intégrité de la structure. Ainsi, il est préférable d'éloigner l'organe électronique qui est aussi une singularité structurelle pour l'architecture de l'enveloppe pneumatique pour limiter les trop forts niveaux de contrainte mécanique dans cette zone et préserver l'intégrité structurelle de l'enveloppe pneumatique.

Selon un mode de réalisation particulier, l'enveloppe pneumatique comprend des quatrièmes fils de renfort disposés de façon adjacente, situés radialement extérieurement à l'organe électronique par rapport à l'axe de référence et présentant un bord libre situé dans la zone où se trouve l'organe électronique. L'organe électronique est éloigné du bord libre radialement intérieur des quatrièmes fils de renfort d'au moins 10 mm, de préférence d'au moins 15 mm.

Ainsi, le bord libre radialement intérieur des quatrièmes fils de renfort représente une singularité mécanique particulièrement propice aux concentrations de contraintes. L'éloignement de l'organe électronique, qui représente aussi une singularité mécanique de par sa rigidité, limite les fortes concentrations de contraintes dans cette zone. De ce fait, l'endurance mécanique de l'enveloppe pneumatique s'en trouve améliorée. Ceci est particulièrement vrai selon la nature des fils de renfort et de leur orientation par rapport au bord libre ce qui nécessite d'ajuster l'éloignement entre les deux singularités.

Selon un mode de réalisation particulier, l'enveloppe pneumatique comprend des cinquièmes fils de renfort métalliques disposés de façon adjacente dont la direction principale n'est pas parallèle à l'axe de référence, situés au moins en partie dans le sommet, délimités par deux bords libres. L'organe électronique est situé axialement entre les deux bords libres des cinquièmes fils de renfort. L'organe électronique est éloigné radialement des cinquième fils de renfort d'au moins 5 mm.

Ainsi, les cinquièmes fils de renfort métallique situés dans le sommet sont susceptibles de perturber la radiocommunication de l'organe électronique situé aussi dans le sommet notamment si les fils métalliques ne sont pas orientés perpendiculairement à l'axe de l'antenne primaire de l'organe électronique. L'éloignement de l'organe électronique des zones métalliques minimisent les perturbations de radiocommunication de l'organe électronique. Cet éloignement est proportionnel à la zone active de champ électromagnétique de l'antenne primaire.

Selon un mode de réalisation préférentiel, l'organe électronique est encapsulé dans au moins une masse de gomme d'enrobage isolante électriquement.

Ainsi la manipulation de l'organe électronique lors de l'étape de fabrication de l'enveloppe pneumatique se trouve facilitée notamment pour assurer le positionnement de l'organe électronique de manière précise et certaine au sein de l'enveloppe pneumatique. En effet, l'organe électronique comprend des composants électroniques et de radiocommunication constitués principalement de métal ou de matière plastique pour lesquels l'adhésion avec une masse de gomme n'est pas naturelle. L'emploi d'une masse d'enrobage dont l'application peut être réalisée hors de la chaine de fabrication de l'enveloppe pneumatique permet de réaliser une interface gomme/gomme dont l'adhésion est souvent facilitée. Enfin, on entend par le terme isolant électriquement que la conductivité électrique de gomme d'enrobage est en deçà du seuil de percolation des charges conductrices du mélange.

Selon un mode de réalisation préférentiel, le module en extension de la masse de gomme d'enrobage est inférieur ou égal au module en extension des mélanges caoutchouteux adjacents.

On entend ici par le terme « module en extension », le module obtenu lors d'une sollicitation d'extension uniaxiale de 10 % après un cycle d'accommodation et à une température de 22°C.

Ainsi, la rigidité de la masse d'enrobage est plus faible ou égale à la rigidité des mélanges caoutchouteux adjacents. De ce fait cette gomme d'enrobage va se déformer sous sollicitations mécaniques sans transmettre d'efforts trop importants à l'organe électronique. Cela tend à améliorer l'endurance mécanique de l'organe électronique.

Selon un mode de réalisation très préférentiel, la constante diélectrique relative de la masse de gomme d'enrobage est inférieure à la constante diélectrique relative des mélanges caoutchouteux adjacents.

D'une manière générale, plus la constante diélectrique de la masse de gomme enrobant l'organe est élevée, plus le signal électrique reçu et émis par l'organe électronique est atténué. Pour des mélanges caoutchouteux de l'enveloppe pneumatique qui ne sont pas isolant électriquement, les constantes diélectriques relatives peuvent atteindre des niveaux de 10 et bien plus dans la gamme des UHF (acronyme d'Ultra Hautes Fréquences). La performance de radiocommunication de l'organe électronique est fortement améliorée si la constante diélectrique de la masse d'enrobage est inférieure aux constantes diélectriques des gommes adjacentes de permittivité élevée (>10). De préférence la constante diélectrique relative de la masse d'enrobage est inférieure à 6,5 et très préférentiellement inférieure à 4,5 dans la gamme de fréquences des UHF.

On entend ici par le terme isolant électriquement que la conductivité électrique de la gomme est en deçà du seuil de percolation des charges conductrices du mélange.

Avantageusement, l'organe électronique est un transpondeur radiofréquence.

Ainsi, l'interrogation de l'organe électronique se fait extérieurement à l'organe électronique de façon passive. Les phases d'interrogation de l'organe électronique ne nécessitent alors aucune énergie propre à l'organe électronique. La fonctionnalité du transpondeur radiofréquence est principalement un rôle d'identification de l'enveloppe pneumatique.

Préférentiellement, l'organe électronique comprend en plus un ou plusieurs composants électroniques passifs ou actifs.

Ainsi, l'organe électronique par l'intermédiaire de ces composants additionnels augmente ses fonctionnalités. Les composants actifs fournissant potentiellement l'énergie nécessaire au fonctionnement des composants additionnels. La source d'énergie pouvant être par exemple une batterie ou un composant piézoélectrique. Ces composants peuvent être aussi un accéléromètre ou un capteur de température.

### Description brève des dessins

L'invention sera mieux comprise à la lecture de la description qui va suivre donnée uniquement à titre d'exemple non limitatif et faite en se référant aux figures annexées sur lesquelles les mêmes numéros de référence désignent partout des parties identiques et dans lesquelles :
- Les figures 1 et 2 sont des vues en perspective d'un transpondeur radiofréquence selon l'un des objets de l'invention ;
- La figure 3 est une vue en perspective et en éclaté d'un transpondeur radiofréquence encapsulé dans une masse de gomme d'enrobage ;
- La figure 4 est une vue en coupe méridienne d'une partie d'une enveloppe pneumatique ;
- La figure 5 est une vue en coupe méridienne du bourrelet d'une enveloppe pneumatique quand l'organe électronique est localisé au niveau de la zone extérieure de l'enveloppe pneumatique ;
- La figure 6 est une vue en coupe méridienne du bourrelet d'une enveloppe pneumatique quand l'organe électronique est localisé au niveau de la zone intérieure de l'enveloppe pneumatique ;
- La figure 7 est une vue en coupe méridienne de la partie d'une enveloppe pneumatique quand l'organe électronique est localisé au niveau du flanc de l'enveloppe pneumatique ; et
- La figure 8 est une vue en coupe méridienne d'une partie de l'enveloppe pneumatique quand l'organe électronique est localisé au niveau du sommet de l'enveloppe pneumatique.

### Description détaillée de modes de réalisation

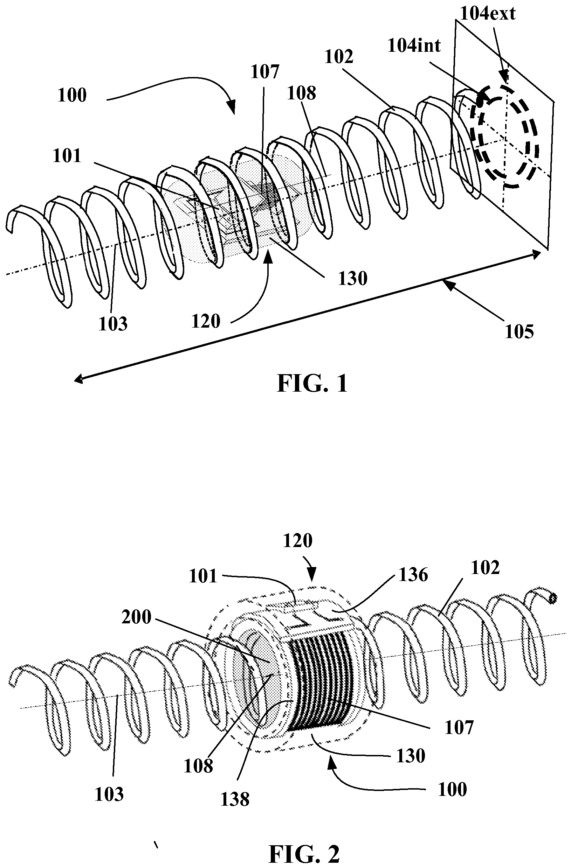

La figure 1 présente un transpondeur radiofréquence 100 dans une configuration où la partie électronique 120 comprenant la puce électronique 101 et l'antenne primaire 107 est située à l'intérieur de l'antenne rayonnante 102. Cette configuration permet un gain de place du transpondeur radiofréquence 100 plutôt destiné à être incorporé dans le bourrelet ou le flanc d'une enveloppe pneumatique. La forme géométrique de la partie électronique 120 est circonscrite dans un cylindre dont le diamètre est inférieur ou égal au diamètre intérieur 104int du ressort hélicoïdal constituant l'antenne rayonnante 102. Ainsi, on assure tout d'abord que l'entrefer entre les deux antennes est faible. De plus, on assure un maintien de la partie électronique 120 par rapport à l'antenne rayonnante 102 permettant d'avoir la même efficacité de transfert énergétique entre les deux antennes sur toute la longueur de l'antenne primaire 107. Enfin l'enfilement de la partie électronique 120 dans l'antenne rayonnante 102 s'en trouve facilité. Le plan médian de l'antenne primaire 107 se trouve dans la zone centrale de l'antenne rayonnante 102 afin de maximiser le couplage électromagnétique entre les deux antennes.

La partie électronique 120 comprend, dans cet exemple, une puce électronique 101 et une antenne primaire 107 connectée électriquement à la puce électronique 101 par l'intermédiaire d'un circuit imprimé. L'antenne primaire 107 est ici constituée par une micro bobine CMS (acronyme de Composant Monté en Surface) présentant un axe de symétrie. On détermine le plan médian de l'antenne primaire défini par une normale parallèle à l'axe de symétrie de la bobine CMS et séparant la bobine en deux parties égales. La connexion électrique entre les composants sur le circuit imprimé est réalisée à l'aide de pistes en cuivre terminé par des pastilles en cuivre. La connexion électrique des composants sur le circuit imprimé est réalisée à l'aide de la technique dite du « wire bonding » par des fils en or de diamètre 20 micromètres entre le composant et les pastilles. L'ensemble constitué du circuit imprimé de la puce électronique 101 de l'antenne primaire 107 est noyé en utilisant la technologie du globtop dans une masse rigide 130 en résine époxy haute température isolante électriquement constituant la partie électronique du transpondeur radiofréquence. Bien entendu, d'autres configurations peuvent être réalisées. Par exemple la masse rigide isolante électriquement peut encapsuler que la puce électronique et une partie de l'antenne primaire.

L'antenne rayonnante 102 est constituée d'un fil en acier de diamètre externe de 200 micromètres qui a été déformé plastiquement afin de former un ressort hélicoïdal de diamètre externe de l'ordre de 1,4 millimètres présentant un axe de révolution définissant le premier axe longitudinal 103. Le ressort hélicoïdal est défini tout d'abord par un diamètre d'enroulement du fil revêtu et un pas d'hélice. Ainsi, on détermine précisément des diamètres intérieur 104int et extérieur 104ext du ressort hélicoïdal en prenant en compte le diamètre du fil. La longueur 105 du ressort comprise entre 35 à 55 millimètres correspond ici à l'enroulement d'un fil droit de longueur égale à la demi-longueur d'onde du signal de transmission du transpondeur radiofréquence dans une masse de mélange élastomère à 915 MHz. Ainsi on peut définir la zone centrale du ressort hélicoïdal correspondant à environ 25 % de la longueur du ressort et de préférence 15 %. La zone centrale est centrée sur le plan médian du ressort hélicoïdal.

La figure 2 présente un transpondeur radiofréquence 100 dans une configuration où la partie électronique 120 se trouve à l'extérieur de l'antenne rayonnante 102. La forme géométrique de la partie électronique présente une cavité cylindrique 200 dont le diamètre est supérieur ou égal au diamètre extérieur de l'antenne rayonnante 102. L'enfilement de l'antenne rayonnante 102 dans la cavité cylindrique 200 de la partie électronique s'en trouve ainsi facilité. Le plan médian de l'antenne primaire 107 se trouve sensiblement dans la zone centrale de l'antenne rayonnante 102. Ce type de transpondeur radiofréquence trouvera plus d'intérêt dans des zones comme le sommet d'une enveloppe pneumatique ou la partie radialement extérieure du flanc. En effet, la partie électronique dans cette configuration peut aisément intégrer des capteurs additionnels tels qu'un accéléromètre, un capteur de température, une batterie sans pour autant nuire au transfert d'énergie entre les deux antennes. La contrainte d'une telle solution est le volume occupé par le transpondeur radiofréquence 100 bien plus volumineux que la première configuration.

Dans une première étape de la réalisation de la partie électronique du transpondeur radiofréquence 100, on connecte par la technique des ultrasons classique de l'industrie microélectronique sur un support flexible 136 constituant le circuit imprimé (traduction en anglais « Flex PCB ») une puce électronique 101 et éventuellement des composants additionnels afin de composer la carte électronique. On mesure l'impédance électrique de la carte électronique par l'intermédiaire d'un appareillage électrique adapté tel un impédancemètre aux bornes des connexions en cuivre sur la face du dessus du circuit imprimé flexible où sera connectée l'antenne primaire. Chacune des connexions en cuivre présente une cavité centrale traversant l'épaisseur du support flexible jusqu'à la face du dessous du support.

Dans une seconde étape, l'antenne primaire 107 est réalisée autour d'un tube en résine isolante électriquement dont le diamètre intérieur, délimitant la cavité cylindrique 200 de la partie électronique, est supérieur ou égal au diamètre externe du ressort hélicoïdal de l'antenne rayonnante 102 soit de l'ordre de 1,5 millimètre. L'épaisseur de ce tube est d'environ 0,5 millimètre. Chaque extrémité du tube présente une surépaisseur de 0,5 millimètre constituant un rebord 138 de largeur inférieure ou égale à 0,5 millimètre.

On enroule un fil de cuivre de diamètre 200 micromètres sur la face externe du tube, entre les deux rebords, afin de constituer un nombre donné de spires ce qui permet de réaliser une antenne primaire 107 sous la forme d'une bobine cylindrique ayant une impédance électrique adaptée à l'impédance de la carte électronique à laquelle elle sera électriquement connectée.

On fixe le circuit imprimé flexible 136 de la carte électronique réalisé à la première étape sur les rebords 138 du tube en résine isolante à l'aide d'une colle conductrice de type H20E de la marque Tedella .Préalablement on a inséré chacune des extrémités du fil de cuivre de l'antenne primaire 107 entre un rebord 138 du tube et le circuit imprimé flexible 136, les deux parties à assembler.

Enfin on réalise une connexion électrique par brasage d'un métal conducteur de type cuivre au travers de la cavité traversant le circuit imprimé flexible 136 au niveau des connexions en cuivre. Ainsi le dispositif électronique constitué de la puce électronique 101 et de l'antenne primaire 107 est réalisé.

Lors de la dernière étape, on revêt le dispositif électronique d'une masse rigide 130 isolante électriquement sur une épaisseur d'au moins 1 millimètre afin de protéger la carte électronique, contenant la puce électronique 101, et l'antenne primaire 107 des agressions chimiques diverses et protéger mécaniquement les connexions électriques. Une technique d'injection est employée consistant à positionner le dispositif électronique dans un moule. Cependant pour préserver la cavité cylindrique 200 du tube initial en résine, on place une membrane souple et imperméable à l'air en élastomère traversant la cavité cylindrique 200 que l'on met sous pression pour rendre hermétique cette cavité cylindrique 200 à la propagation de la résine de protection. L'injection sous pression, à une pression inférieure à celle de la membrane imperméable, à l'état liquide d'une résine époxy à haute température, comme la résine RESOLCOAT 1060ES7 de la marque RESOLTECH, est effectuée. Ce procédé permet une diffusion homogène de la résine sur l'ensemble du dispositif électronique à l'exception de la cavité cylindrique 200. Après l'ouverture du moule et l'arrêt de la mise sous pression de la membrane souple, on extrait le dispositif électronique présentant toujours la cavité cylindrique 200 mais cette fois ci revêtu extérieurement d'une masse rigide en résine isolante électriquement. L'ensemble représente la partie électronique 120 du transpondeur radio fréquence 100.

On introduit ensuite l'antenne rayonnante 102 dans la cavité 200 de la partie électronique 120 de telle sorte que le plan médian de la partie électronique 120 correspondant au plan médian de la bobine se situe dans la zone centrale de l'antenne rayonnante 102. L'enfilement du ressort hélicoïdal dans la cavité 200 assure de fait la coaxialité du premier axe longitudinal 103 par rapport au deuxième axe longitudinal 108. L'ensemble assure un transfert d'énergie optimale entre les deux antennes.

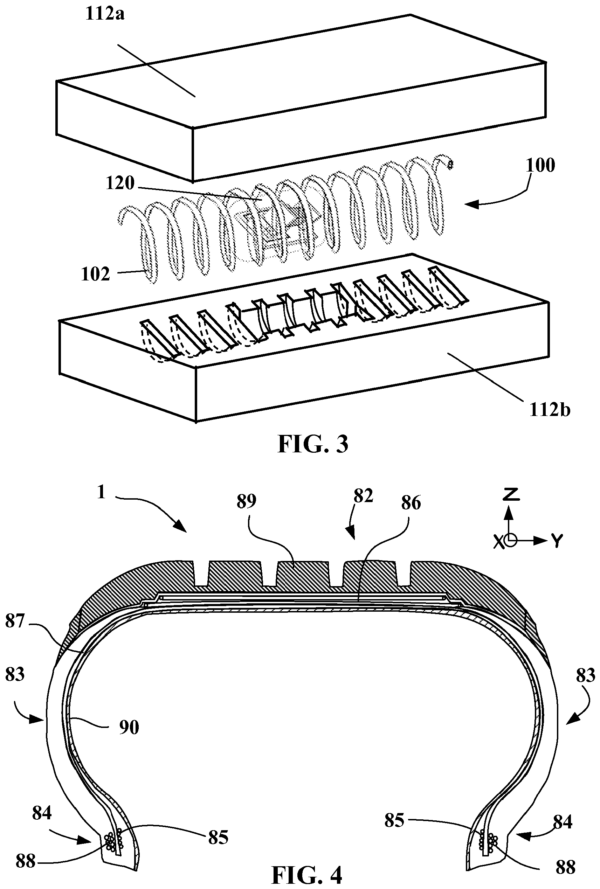

La figure 3 présente un transpondeur radiofréquence 100 noyé dans une masse souple 112 en matériau élastomère isolant électriquement représentée par les plaques 112a et 112b de dimensions fonction de celle de l'antenne rayonnante 102 et une épaisseur comprise par exemple entre 2 et 5 millimètres. Ce transpondeur radiofréquence 100 est destinée par exemple à être introduit dans le bourrelet à proximité de la gomme de bourrage tringle qui est adjacente et radialement extérieure à la tringle annulaire. Ici le transpondeur radiofréquence 100 est dans une configuration où la partie électronique120 est située à l'intérieur de l'antenne rayonnante 102 ce qui permet de miniaturiser au maximum le transpondeur radiofréquence 100. La masse souple 112 a un module en extension de l'ordre de 3,2 MPa et une permittivité diélectrique relative inférieure à 6,5.

La figure 4 présente en coupe méridienne d'une enveloppe pneumatique 1 comportant un sommet 82 renforcé par une armature de sommet ou ceinture 86, deux flancs 83 et deux bourrelets 84. L'armature de sommet 86 est surmontée radialement extérieurement d'une bande de roulement caoutchouteuse 89. L'armature de sommet 86 est constituée de deux nappes de renforts superposées. La première nappe est réalisée à partir de fils de renfort métallique disposés de façon adjacente et encapsulés dans une masse de gomme de calandrage. Les fils de renfort de la première nappe ont une direction principale faisant un angle de 25° en sens direct par rapport à l'axe de référence de l'enveloppe pneumatique 1 .La seconde nappe de renfort est aussi constituée d'une série de fils de renfort métallique disposés de façon adjacente et encapsulés dans un masse de gomme de calandrage. En revanche, la direction principale de ces seconds fils de renfort fait un angle de 25° par rapport l'axe de référence mais dans le sens indirect. Une armature de carcasse 87, constituée des premiers fils de renforts disposés de façon adjacente pour former un alignement circonférentiel et d'une gomme de calandrage les protégeant, est ancrée dans les bourrelets 84 séparant l'enveloppe pneumatique en deux zones que l'on nommera zone intérieure en direction de la cavité fluide et zone extérieure vers l'extérieur de l'ensemble monté. L'ancrage de cette armature de carcasse 87 est réalisée au niveau de chaque bourrelet 84 à l'aide de spirales 85 situées intérieurement par rapport à l'armature de carcasse 87 et de spirales 88 situées extérieurement. Chaque spirales est réalisées par l'enroulement de fils de renfort, ici métallique, autour de l'axe de référence Une couche de gomme intérieure étanche 90 (en anglais « inner liner ») s'étend d'un bourrelet à l'autre radialement intérieurement relativement à l'armature de carcasse 87.

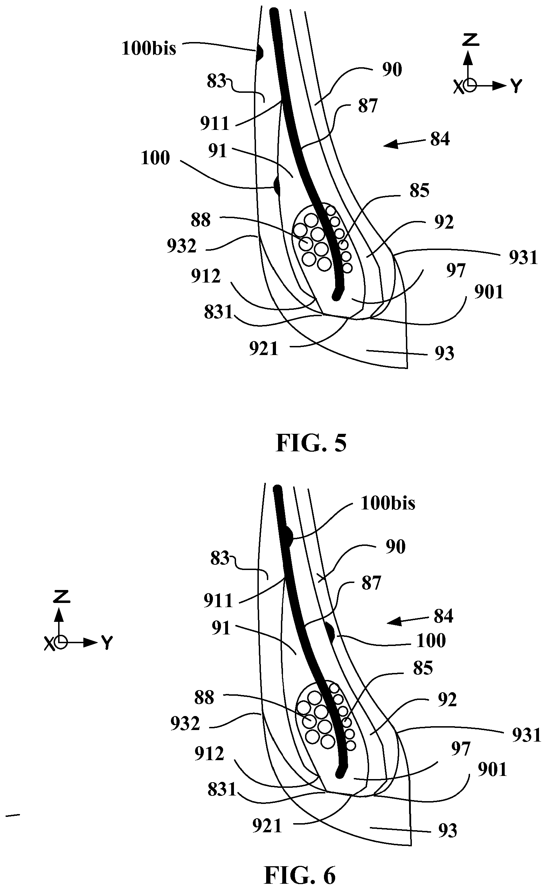

La figure 5 représente une vue de détail de l'enveloppe pneumatique 1 au niveau du bourrelet 84.Cette figure illustre le positionnement de du transpondeur radiofréquence 100 dans la zone extérieure de l'enveloppe pneumatique 1 par rapport à l'armature de carcasse 87.

Le bourrelet 84 est constitué par la spirale 85 située intérieurement et les deux spirales 88 situées extérieurement et prenant en sandwich l'armature de carcasse 87. Ces spirales métalliques sont noyées dans une masse de gomme 97 d'enrobage de très haut module et très résistante au fluage qui ancre ainsi les fils de renfort. Une masse de gomme 91 de bourrage est située axialement et radialement extérieurement et de façon adjacente à la masse de gomme 97 d'ancrage et à l'armature de carcasse 87. Elle présente un premier bord libre radialement extérieur 911 prenant appui sur une face de l'armature de carcasse 87. Le bord libre radialement intérieur 912 de cette masse de bourrage prend appui elle sur la masse d'enrobage 97. Enfin le flanc 83 recouvre à la fois la gomme de bourrage 91 et l'armature de carcasse 87. Le flanc possède un bord libre 831 situé radialement intérieurement et se terminant sur la masse de gomme 97 en partie radialement intérieure.

Sur la zone intérieure de l'enveloppe pneumatique 1 se trouve la gomme intérieure étanche 90. Elle se termine par un bord libre 901 adjacent au protecteur talon 93. Entre la gomme intérieure étanche 90 et l'armature de carcasse 87 est positionné une masse de gomme de bourrage 92 qui présente un bord libre radialement intérieur 921 prenant appui sur la partie radialement intérieure de la masse d'enrobage 97. Enfin un protecteur talon 93 vient protéger le bourrelet et notamment les extrémités radialement intérieures 901, 921 et 831 respectivement de la gomme intérieure étanche 90, de la gomme de bourrage 92 et du flanc 83. La face extérieure de ce protecteur talon 93 est apte à être en contact direct avec le crochet de jante lors du montage de l'enveloppe pneumatique sur la roue. Ce protecteur talon 93 présente deux bords libres radialement extérieurs. Le premier bord libre 931 est situé dans la zone intérieure de l'enveloppe pneumatique 1. Le second bord libre 932 est situé dans la zone extérieure de l'enveloppe pneumatique 1.

Le bourrelet 84 de cette enveloppe pneumatique est équipé de deux transpondeurs radio fréquences 100 et 100bis situés dans la zone extérieure de l'enveloppe pneumatique 1. Le premier transpondeur radio fréquence 100 étant préalablement encapsulé dans une gomme d'enrobage isolante électriquement est positionné sur la face extérieure du bourrage 91. Il est positionné à une distance d'au moins 10 millimètres du bord libre 932 du protecteur talon qui constitue une singularité mécanique. Ce positionnement assure une zone de stabilité mécanique pour le transpondeur radiofréquence 100 qui est bénéfique à son endurance mécanique. De plus, son enfouissement au sein même de la structure de l'enveloppe mécanique 1 lui assure une bonne protection aux agressions mécaniques en provenance de l'extérieur du pneumatique.

Le deuxième transpondeur radiofréquence 100bis étant préalablement encapsulé dans une gomme d'enrobage isolante électriquement compatible ou similaire avec le matériau du flanc 83 est positionné sur la face extérieure du flanc. La similarité de matériau entre le flanc 83 et la gomme d'enrobage assure une mise en place au sein et à la périphérie du flanc 83 du transpondeur radiofréquence 100bis au cours du procédé de cuisson. Le transpondeur radiofréquence 100bis est simplement posé sur la face extérieure à cru du flanc 83 au cours de la confection de l'enveloppe pneumatique 1. La mise sous pression de l'ébauche cru dans le moule de cuisson assure le positionnement du transpondeur radiofréquence 100bis à l'état cuit tel que représenté. Ce transpondeur radiofréquence 100bis est situé loin de tout bord libre d'un constituant caoutchouteux de l'enveloppe pneumatique. En particulier il est éloigné du bord libre 932 du protecteur talon, du bord libre 911 de la gomme de bourrage. Son positionnement en partie haute du bourrelet assure une performance de communication accrue avec un lecteur radiofréquence externe. Les sollicitations cycliques lors du roulage ne seront pas gênantes en raison du découplage mécanique entre l'antenne rayonnante et la partie électronique.

La figure 6 représente une vue de détail d'une enveloppe pneumatique 1 au niveau du bourrelet 84. Cette figure illustre le positionnement du transpondeur radiofréquence 100 dans la zone intérieure de l'enveloppe pneumatique 1 par rapport à l'armature de carcasse 87.

La localisation du transpondeur radiofréquence 100 au niveau de l'interface entre la gomme intérieure étanche 90 et la gomme de bourrage 92 permet une stabilisation mécanique de l'organe électronique. Le transpondeur radiofréquence 100 est au-dessus d'environ 40 millimètres du bord libre 931 du protecteur talon 93 qui constitue une singularité mécanique en raison de la forte rigidité du protecteur talon 93 par rapport à la gomme intérieure étanche 90 et à la gomme de bourrage 92. En revanche, afin d'assurer une performance de radiocommunication convenable, il est indispensable d'employer une gomme d'enrobage pour le transpondeur radiofréquence 100 qui soit isolante électriquement et de placer le premier axe longitudinal de l'antenne rayonnante perpendiculaire aux fils de renfort de l'armature de carcasse 87. D'un point de vue endurance mécanique, cette localisation est idéale pour l'organe électronique qui est protégé de toute agression mécanique externe et de toute agression thermomécanique interne.

La seconde localisation du transpondeur radiofréquence 100bis selon l'invention permet une meilleure performance radiocommunication en étant placé plus haut dans le bourrelet 84. Toutefois, il convient de l'enrober dans une gomme isolante électriquement et de positionner le premier axe longitudinal de l'antenne rayonnante perpendiculairement aux fils de renfort de l'armature de carcasse 87. Ici, dans cet exemple, le premier axe longitudinal est placé circonférentiellement.

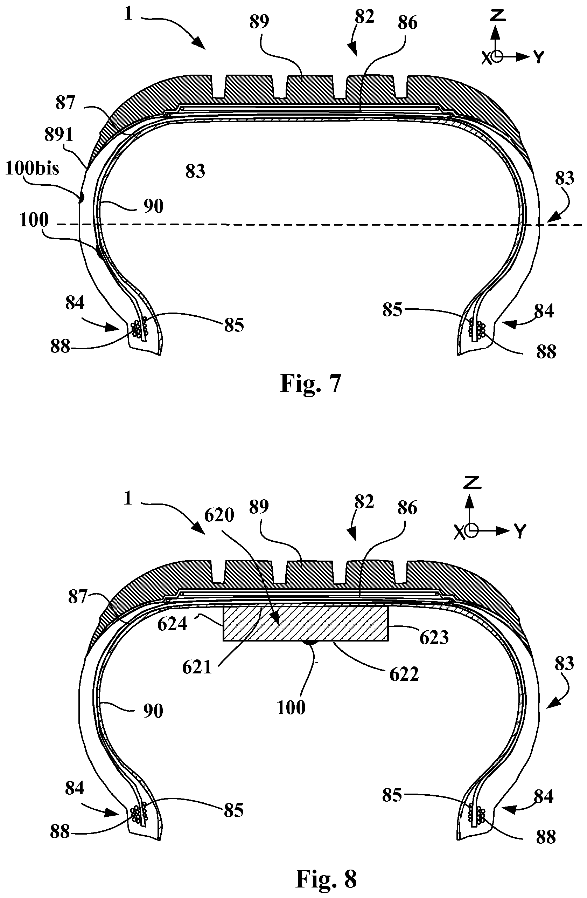

La figure 7 présente une vue en coupe méridienne d'une enveloppe pneumatique 1 correspondant à l'implantation du transpondeur radiofréquence 100 au niveau du flanc 83 de l'enveloppe pneumatique 1. Dans cet exemple l'implantation du transpondeur radiofréquence 100 est réalisée sensiblement au milieu de la hauteur du flanc 83 de l'enveloppe pneumatique 1 matérialisé par la ligne pointillée. C'est une zone idéale en termes de radiocommunication puisque l'on est tout d'abord éloigné des fortes zones métalliques de l'ensemble monté 1 en offrant un espace libre sur l'extérieur de l'ensemble monté. De plus, les gommes environnantes sont des gommes souples, peu chargées généralement ce qui est propice au bon fonctionnement radio fréquence du transpondeur radiofréquence 100. Concernant l'intégrité physique de l'organe électronique, bien que cette zone géométrique soit fortement sollicitée cycliquement lors du passage dans l'aire de contact en particulier, le découplage mécanique de l'antenne rayonnante avec la partie électronique autorise une durée de vie satisfaisante du transpondeur radiofréquence 100. Concernant l'intégrité physique de l'enveloppe pneumatique 1, il convient de placer le transpondeur radiofréquence 100 suffisamment éloigné des bords libres des gommes de bourrage qui sont ici localisées dans la zone extérieure de l'enveloppe pneumatique 1. En prenant appui sur l'armature de carcasse 87, il convient, après l'avoir au besoin, encapsulé dans une masse d'enrobage isolante électriquement, de placer le premier axe longitudinal de l'organe électronique perpendiculaire aux fils de renfort de l'armature de carcasse 87 ce qui revient à le placer circonférentiellement dans le cas d'une enveloppe pneumatique 1 à structure radiale. On évite cependant préférentiellement de placer l'organe électronique dans la zone milieu du flanc, la plus sollicitée mécaniquement en roulage.

La seconde position au niveau du flanc 83, revient à positionner le transpondeur radiofréquence 100bis sur la face extérieure du flanc en l'encapsulant dans une gomme similaire à celle du flanc 83. L'avantage de cette position est l'homogénéité matériau autour de l'organe électronique qui améliore la performance de radiocommunication de l'antenne rayonnante. Afin de satisfaire aux contraintes liées à l'intégrité de l'enveloppe pneumatique 1, il convient d'éloigner le transpondeur radiofréquence 100bis de tout bord libre de nappe de renfort ou de masse de gomme situé dans la zone extérieure de l'enveloppe pneumatique 1. En particulier on prendra soin d'éloigner d'au moins de 5 millimètres le transpondeur radiofréquence 100bis du bord libre 891 de la bande de roulement 89. Bien entendu l'intégrité physique du transpondeur radiofréquence 100bis sera d'autant plus assurée que le position radiale de ce dernier sera éloignée de l'équateur correspondant aux extrémités axiales de l'ensemble monté qui sont des zones propices à des chocs avec les équipement routiers comme les bordures de trottoir. D'autres positions, non illustrées dans les dessins sont possibles notamment sur la zone intérieure de l'enveloppe pneumatique 1 par rapport à l'armature de carcasse 87. La zone intérieure de l'enveloppe pneumatique constitue une zone de protection naturelle pour l'organe électronique bénéfique à son intégrité physique au détriment d'une performance de radiocommunication légèrement diminuée. Cette zone intérieure a aussi l'avantage de limiter les nombre de bords libres de constituants de l'enveloppe pneumatique qui sont potentiellement des points faibles vis-à-vis de l'endurance mécanique de l'enveloppe pneumatique équipée d'un organe électronique.

La figure 8 présente une vue en coupe méridienne d'une enveloppe pneumatique 1 correspondant à l'implantation du transpondeur radiofréquence 100 au niveau du sommet 82 de l'enveloppe pneumatique 1. L'enveloppe pneumatique 1 comprend dans cet exemple une armature de sommet 86 constituée par deux nappes de renfort métallique orientées à 25 degrés par rapport à l'axe de référence, l'une en sens horaire et l'autre en sens anti horaire. L'enveloppe pneumatique 1 comprend aussi un constituant 620 de type mousse élastomère destiné à amortir les bruits de résonance de cavité. Cette mousse 620 se présente comme un anneau de section rectangulaire autour de l'axe de référence de l'enveloppe pneumatique 1. La section de l'anneau comprend deux faces 621 et 622 situées radialement respectivement extérieurement et intérieurement par rapport à l'axe de référence. Ces deux faces étant reliées entre elles par deux bords axiaux 623 et 624 formant une épaisseur de l'ordre de 5 millimètres. Ce constituant 620 est fixé par des moyens d'adhésion classiques sur la face radialement inférieure de la gomme intérieure étanche 90 de l'enveloppe pneumatique à l'état cuit au niveau de la face 621 radialement extérieure. Le transpondeur radiofréquence 100 est fixé sur la face 622 radialement inférieure par tout type de moyens d'adhésion chimique telles que des colles de type polyuréthane, silicone, cyanoacrylate ou polyéther silanisé. Ainsi, le transpondeur radiofréquence 100 est radialement suffisamment éloigné des nappes de renfort métalliques pour ne pas être perturbé dans son fonctionnement radiofréquence. De plus, il est aussi éloigné de tout bord libre de constituant caoutchouteux de l'enveloppe pneumatique 1. Enfin, l'amortissement du constituant 620 préserve tout transfert d'énergie trop élevé vers le transpondeur radiofréquence 100. L'intérêt de ce positionnement est de permettre la communication du transpondeur radiofréquence 100 par les deux flancs 83 de l'enveloppe pneumatique 1 indifféremment. Ceci est commode pour ne plus intégrer l'organe électronique sur le côté extérieur ou intérieur de l'ensemble monté selon l'usage. On peut orienter l'axe de l'organe électronique axialement ou circonférentiellement.

D'autres positions du transpondeur radiofréquence 100 au niveau du sommet 82 sont possibles bien que non illustrées dans les figures annexées. Par exemple, lorsque la bande de roulement 89 est constitué par deux mélanges élastomères superposés radialement ayant des fonctions et des propriétés matériaux différenciées. L'incorporation du transpondeur radiofréquence au niveau de l'interface entre ces deux mélanges assure d'une part un éloignement suffisant de l'organe électronique par rapport aux nappes de renfort 86 métalliques du sommet 82. La lecture par l'extérieur de la bande de roulement 89 est aussi facilitée. Pour des considérations de tenue à la chaleur de l'organe électronique, le positionnement du transpondeur radiofréquence au droit d'un sillon longitudinal serait alors préférable pour la durée de vie du composant et de l'intégrité de l'enveloppe pneumatique.

Une autre alternative serait de placer le transpondeur radiofréquence 100 sur la face radialement inférieure d'une couche de mélange caoutchouteux auto obturant située sur la gomme intérieure étanche 90 au droit de la bande de roulement 89. Cette couche a de fortes propriétés collantes gomme/gomme et offre une épaisseur radiale suffisante pour assurer un éloignement suffisant entre l'organe électronique et les nappes de renforts métalliques.

Ainsi, le positionnement du transpondeur radiofréquence 100 sur la zone intérieure ou extérieure de l'enveloppe pneumatique 1 par rapport à l'armature de carcasse 87 est possible même au niveau du sommet 82.

## Revendications

1. Enveloppe pneumatique (1) équipée d'un transpondeur radiofréquence (100, 100bis) et comportant un sommet (82), deux flancs (83) et deux bourrelets (84) de révolution autour d'un axe de référence, des premiers fils (87) formant des allers et retours disposés de façon adjacente, alignés circonférentiellement, ancrés dans lesdits deux bourrelets avec, au niveau de chaque bourrelet (84) , des boucles reliant chaque fois un aller à un retour et dans chaque bourrelet (84) des moyens d'ancrage desdits premiers fils comprenant des seconds fils (88, 85) orientés circonférentiellement bordant axialement les premiers fils (87) et formant au moins une spirale, les dits premiers fils (87) formant au moins un alignement circonférentiel définissant la nappe carcasse qui sépare ladite enveloppe pneumatique en deux zones intérieure et extérieure par rapport à ladite nappe carcasse, et le transpondeur radiofréquence (100, 100bis) comprenant au moins une puce électronique (101) et une antenne rayonnante (102) de radiocommunication et étant disposé radialement extérieurement relativement à la au moins une spirale dans la structure d'enveloppe de pneumatique,
**caractérisée en ce que** le transpondeur radiofréquence comprend une antenne primaire (107) connectée électriquement à la puce électronique (101), **en ce que** l'antenne primaire (107) est couplée électromagnétiquement à l'antenne rayonnante (102), **en ce que** l'antenne rayonnante (102) est constituée d'un ressort hélicoïdal monobrin définissant un premier axe longitudinal (103) **et en ce que** l'antenne primaire (107) est une bobine ayant au moins une spire définissant un deuxième axe longitudinal (108) qui est circonscrite dans un cylindre dont l'axe de révolution est parallèle au deuxième axe longitudinal (108) et dont le diamètre est compris entre le tiers et trois fois, de préférence entre la moitié et deux fois, le diamètre moyen du ressort hélicoïdal de l'antenne rayonnante (102) .

2. Enveloppe pneumatique (1) selon la revendication 1, dans lequel, l'antenne rayonnante (102) ayant une zone centrale entre deux zones latérales et l'antenne primaire (107) ayant un plan médian perpendiculaire au deuxième axe longitudinal (108), lesdits premier (103) et deuxième (108) axes longitudinaux sont parallèles entre eux et ledit plan médian de l'antenne primaire (107) est disposé dans la zone centrale de l'antenne rayonnante (102).

3. Enveloppe pneumatique (1) selon l'une quelconque des revendications précédentes, dans lequel, le premier axe longitudinal (103) du transpondeur radiofréquence (100, 100bis) est orienté perpendiculairement relativement aux premiers fils (87) du au moins un alignement circonférentiel.

4. Enveloppe pneumatique (1) selon l'une des revendications précédentes, dans lequel l'enveloppe pneumatique (1) comprenant au moins une première gomme annulaire (93, 91), coaxiale à l'axe de référence, située radialement entre l'axe de référence et le transpondeur radiofréquence, avec au moins un bord (931, 932, 911, 912) situé dans la zone de l'enveloppe pneumatique où est localisé le transpondeur radiofréquence (100, 100bis), ledit transpondeur radiofréquence (100, 100bis) est éloigné du au moins un bord (931, 932, 911, 912) radialement externe de la première masse de gomme (91, 93) d'au moins 5 mm, de préférence d'au moins 10 mm.

5. Enveloppe pneumatique (1) selon l'une quelconque des revendications précédentes, dans lequel l'enveloppe pneumatique (1) comprenant des troisièmes fils de renfort disposés de façon adjacente et s'étendant radialement entre un bord radialement interne et un bord radialement externe qui sont situés dans la zone de l'enveloppe pneumatique (1) où se trouve le transpondeur radiofréquence, situés radialement entre l'axe de référence et le transpondeur radiofréquence, ledit transpondeur radiofréquence est éloigné d'un bord radialement externe desdits troisièmes fils de renfort d'au moins 10 mm, de préférence d'au moins 15 mm.

6. Enveloppe pneumatique (1) selon l'une des revendications précédentes, dans lequel l'enveloppe pneumatique (1) comprenant au moins une deuxième masse de gomme annulaire (89), coaxiale à l'axe de référence, située radialement extérieurement au transpondeur radiofréquence (100, 100bis) par rapport à l'axe de référence avec au moins un bord (891) situé dans la zone de l'enveloppe pneumatique (1) où est localisé le transpondeur radiofréquence (100, 100bis), ledit transpondeur radiofréquence(100, 100bis) est éloigné du au moins un bord(891) radialement interne de la au moins une deuxième masse de gomme (89) d'au moins 5 mm, de préférence d'au moins 10 mm.

7. Enveloppe pneumatique (1) selon l'une quelconque des revendications précédentes, dans lequel l'enveloppe pneumatique (1) comprenant au moins des quatrièmes fils de renfort (86) disposés de façon adjacente, situés radialement extérieurement au transpondeur radiofréquence (100, 100bis) par rapport à l'axe de référence et présentant au moins un bord libre situé dans la zone de l'enveloppe pneumatique (1) où est localisé le transpondeur radiofréquence (100, 100bis), ledit transpondeur radiofréquence (100, 100bis) est éloigné d'un bord libre radialement intérieur des au moins quatrièmes fils de renfort (86) d'au moins 10 mm, de préférence d'au moins 15 mm.

8. Enveloppe pneumatique (1) selon l'une des revendications 1 à 7, dans lequel l'enveloppe pneumatique (1) comprenant au moins des cinquièmes fils de renfort métalliques (86) disposés de façon adjacente dont la direction principale n'est pas parallèle à l'axe de référence, situés au moins en partie dans le sommet (82), délimitée par deux bords libres, ledit transpondeur radiofréquence (100), situé axialement entre lesdits deux bords libres, est éloigné radialement des au moins cinquièmes fils de renfort (86) d'au moins 5 mm.

9. Enveloppe pneumatique (1) selon l'une quelconque des revendications précédentes, dans lequel le transpondeur radiofréquence (100, 100bis) est encapsulé dans au moins une masse de gomme d'enrobage isolante électriquement.

10. Enveloppe pneumatique (1) selon la revendication 9, dans lequel le module en extension de la masse de gomme d'enrobage est inférieur ou égal au module en extension des mélanges caoutchouteux adjacents.

11. Enveloppe pneumatique selon l'une des revendications 9 à 10, dans lequel la constante diélectrique relative de la masse de gomme d'enrobage est inférieure à la constante diélectrique relative des mélanges caoutchouteux adjacents.

12. Enveloppe pneumatique (1) selon l'une quelconque des revendications précédentes, dans lequel le transpondeur radiofréquence (100, 100bis) comprend en plus un ou plusieurs composants électroniques passifs ou actifs.

## Patentansprüche

1. Reifenmantel (1), der mit einem Radiofrequenztransponder (100, 100bis) ausgestattet ist und einen Scheitel (82), zwei Flanken (83) und zwei Wülste (84) zur Drehung um eine Referenzachse aufweist, wobei erste Drähte (87) nebeneinander angeordnete Hin- und Rückwege bilden, die in Umfangsrichtung ausgerichtet sind, in den beiden Wülsten verankert sind und im Bereich jeder Wulst (84) Schleifen aufweisen, die jeweils einen Hinweg mit einem Rückweg verbinden, und wobei in jeder Wulst (84) Mittel zur Verankerung der ersten Drähte zweite Drähte (88, 85) umfassen, die in Umfangsrichtung ausgerichtet sind, die ersten Drähte (87) axial begrenzen und zumindest eine Spirale bilden, wobei die ersten Drähte (87) zumindest eine Umfangsausrichtung bilden, die die Karkassenlage definiert, die den Reifenmantel in Bezug auf die Karkassenlage in einen inneren Bereich und einen äußeren Bereich unterteilt, und wobei der Radiofrequenztransponder (100, 100bis) zumindest einen Mikrochip (101) und eine strahlende Antenne (102) zur Radiokommunikation umfasst und in Bezug auf die zumindest eine Spirale in der Reifenmantelstruktur radial außen angeordnet ist,
**dadurch gekennzeichnet, dass** der Radiofrequenztransponder eine Primärantenne (107) umfasst, die elektrisch mit dem Mikrochip (101) verbunden ist, dass die Primärantenne (107) elektromagnetisch mit der strahlenden Antenne (102) gekoppelt ist, dass die strahlende Antenne (102) aus einer einsträngigen Schraubenfeder gebildet ist, die eine erste Längsachse (103) definiert, und dass die Primärantenne (107) eine Spule mit zumindest einer Windung ist, die eine zweite Längsachse (108) definiert, die in einen Zylinder eingefasst ist, dessen Drehachse parallel zur zweiten Längsachse (108) verläuft und dessen Durchmesser zwischen einem Drittel und dem Dreifachen, vorzugsweise zwischen der Hälfte und dem Doppelten, des mittleren Durchmessers der Schraubenfeder der strahlenden Antenne (102) liegt.

2. Reifenmantel (1) nach Anspruch 1, wobei die strahlende Antenne (102) einen zentralen Bereich zwischen zwei Seitenbereichen aufweist und die Primärantenne (107) eine Mittelebene senkrecht zur zweiten Längsachse (108) aufweist, wobei die erste (103) und die zweite (108) Längsachse parallel zueinander sind und die Mittelebene der Primärantenne (107) im zentralen Bereich der strahlenden Antenne (102) angeordnet ist.

3. Reifenmantel (1) nach einem der vorangehenden Ansprüche, wobei die erste Längsachse (103) des Radiofrequenztransponders (100, 100bis) in Bezug auf die ersten Drähte (87) der zumindest einen Umfangsausrichtung senkrecht ausgerichtet ist.

4. Reifenmantel (1) nach einem der vorangehenden Ansprüche, wobei der Reifenmantel (1) zumindest einen ersten ringförmigen Gummi (93, 91) umfasst, der koaxial zur Referenzachse ist, radial zwischen der Referenzachse und dem Radiofrequenztransponder angeordnet ist und zumindest eine Kante (931, 932, 911, 912) aufweist, die sich in dem Bereich des Reifenmantels befindet, in dem der Radiofrequenztransponder (100, 100bis) lokalisiert ist, wobei der Radiofrequenztransponder (100, 100bis) um mindestens 5 mm, vorzugsweise um mindestens 10 mm, von der zumindest einen radial äußeren Kante (931, 932, 911, 912) der ersten Gummimasse (91, 93) beabstandet ist.

5. Reifenmantel (1) nach einem der vorangehenden Ansprüche, wobei der Reifenmantel (1) dritte Verstärkungsdrähte umfasst, die nebeneinander angeordnet sind und sich radial zwischen einer radial inneren Kante und einer radial äußeren Kante erstrecken, die in dem Bereich des Reifenmantels (1) angeordnet sind, in dem sich der Radiofrequenztransponder befindet, und die radial zwischen der Referenzachse und dem Radiofrequenztransponder angeordnet sind, wobei der Radiofrequenztransponder um mindestens 10 mm, vorzugsweise um mindestens 15 mm, von einer radial äußeren Kante der dritten Verstärkungsdrähte beabstandet ist.

6. Reifenmantel (1) nach einem der vorangehenden Ansprüche, wobei der Reifenmantel (1) zumindest eine zweite ringförmige Gummimasse (89) umfasst, die koaxial zur Referenzachse ist, in Bezug auf die Referenzachse radial außerhalb des Radiofrequenztransponders (100, 100bis) angeordnet ist und zumindest eine Kante (891) aufweist, die in dem Bereich des Reifenmantels (1) angeordnet ist, in dem sich der Radiofrequenztransponder (100, 100bis) befindet, wobei der Radiofrequenztransponder (100, 100bis) um mindestens 5 mm, vorzugsweise um mindestens 10 mm, von der zumindest einen radial inneren Kante (891) der zumindest einen zweiten Gummimasse (89) beabstandet ist.

7. Reifenmantel (1) nach einem der vorangehenden Ansprüche, wobei der Reifenmantel (1) zumindest vierte Verstärkungsdrähte (86) umfasst, die nebeneinander angeordnet sind, sich in Bezug auf die Referenzachse radial außerhalb des Radiofrequenztransponders (100, 100bis) befinden und zumindest eine freie Kante aufweisen, die sich in dem Bereich des Reifenmantels (1) befindet, in dem der Radiofrequenztransponder (100, 100bis) angeordnet ist, wobei der Radiofrequenztransponder (100, 100bis) um mindestens 10 mm, vorzugsweise um mindestens 15 mm, von einer radial inneren freien Kante der zumindest vierten Verstärkungsdrähte (86) beabstandet ist.

8. Reifenmantel (1) nach einem der Ansprüche 1 bis 7, wobei der Reifenmantel (1) zumindest fünfte Metallverstärkungsdrähte (86) umfasst, die nebeneinander angeordnet sind, deren Hauptrichtung nicht parallel zur Referenzachse verläuft, die sich zumindest teilweise im Scheitel (82) befinden und die durch zwei freie Kanten begrenzt sind, wobei der Radiofrequenztransponder (100), der axial zwischen den beiden freien Kanten angeordnet ist, radial um mindestens 5 mm von den zumindest fünften Verstärkungsdrähten (86) beabstandet ist.

9. Reifenmantel (1) nach einem der vorangehenden Ansprüche, wobei der Radiofrequenztransponder (100, 100bis) in zumindest eine elektrisch isolierende Gummivergussmasse eingekapselt ist.

10. Reifenmantel (1) nach Anspruch 9, wobei der Dehnungsmodul der Gummivergussmasse kleiner als oder so groß wie der Dehnungsmodul der angrenzenden Kautschukmischungen ist.

11. Reifenmantel nach einem der Ansprüche 9 bis 10, wobei die Dielektrizitätskonstante der Gummivergussmasse kleiner als die relative Dielektrizitätskonstante der angrenzenden Kautschukmischungen ist.

12. Reifenmantel (1) nach einem der vorangehenden Ansprüche, wobei der Radiofrequenztransponder (100, 100bis) außerdem eine oder mehrere passive oder aktive elektronische Komponenten umfasst.

## Claims

1. Tyre casing (1) equipped with a radiofrequency transponder (100, 100bis) and including a crown (82), two sidewalls (83] and two beads (84] revolving around a reference axis, first threads (87) forming outward segments and return segments that are arranged adjacently, aligned circumferentially, anchored in said two beads with, in each bead (84), loops in each case linking an outward segment to a return segment and, in each bead, means for anchoring said first threads, comprising second threads (88, 855) oriented circumferentially axially bordering the first threads (87) and forming at least one spiral, said first threads (87) forming at least one circumferential alignment defining the carcass ply that separates said tyre casing into two zones, inside and outside with respect to said carcass ply, and the radiofrequency transponder (100, 100bis) comprising at least one electronic chip (101) and a radiating radiocommunication antenna (102) and being positioned radially externally in relation to the at least one spiral, **characterized in that** the radiofrequency transponder comprises a primary antenna (107) electrically connected to the electronic chip (101), **in that** the primary antenna (107) is electromagnetically coupled to the radiating antenna (102), **in that** the radiating antenna (10é) is formed by a single-strand helical spring defining a first longitudinal axis(103) , **and in that** the primary antenna (107) is a coil having at least one turn defining a second longitudinal axis (108) that is circumscribed in a cylinder the axis of revolution of which is parallel to the second longitudinal axis (108) and the diameter of which is between a third and three times, preferably between half and two times, the mean diameter of the helical spring of the radiating antenna (102).

2. Tyre casing (1) according to Claim 1, wherein, with the radiating antenna (102) having a central zone between two lateral zones and the primary antenna (107) having a median plane perpendicular to the second longitudinal axis (108), said first (103) and second (108) longitudinal axes are parallel to one another and said median plane of the primary antenna (107) is arranged in the central zone of the radiating antenna (102).

3. Tyre casing (1) according to either one of the preceding claims, wherein the first longitudinal axis (103) of the radiofrequency transponder (100, 100bis) is oriented perpendicular in relation to the first threads (87) of the at least one circumferential alignment.

4. Tyre casing (1) according to one of the preceding claims, wherein, with the tyre casing (1) comprising at least one first annular rubber (93, 91), coaxial with the reference axis, situated radially between the reference axis and the radiofrequency transponder, with at least one edge (931, 932, 911, 912) situated in the zone of the tyre casing in which the radiofrequency transponder (100, 100bis) is located, said radiofrequency transponder (100, 100bis) is spaced from the at least one radially outer edge (921, 932, 911, 912) of the first rubber mass (91, 93) by at least 5 mm, preferably by at least 10 mm.

5. Tyre casing (1) according to any one of the preceding claims, wherein, with the tyre casing (1) comprising third reinforcing threads arranged adjacently and extending radially between a radially inner edge and a radially outer edge that are situated in the zone of the tyre casing (1) at which the electronic unit is located, and that are situated radially between the reference axis and the radiofrequency transponder, said radiofrequency transponder is spaced from a radially outer edge of said third reinforcing threads by at least 10 mm, preferably by at least 15 mm.

6. Tyre casing (1) according to one of the preceding claims, wherein, with the tyre casing (1) comprising at least one second annular rubber mass (89), coaxial with the reference axis, situated radially externally to the radiofrequency transponder (100, 100bis) with respect to the reference axis, with at least one edge (891) situated in the zone of the tyre casing (1) in which the radiofrequency transponder (100, 100bis) is located, said radiofrequency transponder (100, 100bis) is spaced from the at least one radially inner edge (891) of the at least one second rubber mass (89) by at least 5 mm, preferably by at least 10 mm.

7. Tyre casing (1) according to any one of the preceding claims, wherein, with the tyre casing (1) comprising at least fourth reinforcing threads (86) arranged adjacently, situated radially externally to the radiofrequency transponder (100, 100bis) with respect to the reference axis, and having at least one free edge situated in the zone of the tyre casing (1) in which the radiofrequency transponder (100, 100bis) is located, said radiofrequency transponder (100, 100bis) is spaced from a radially inner free edge of the at least fourth reinforcing threads (86) by at least 10 mm, preferably by at least 15 mm.

8. Tyre casing (1) according to one of Claims 1 to 7, wherein, with the tyre casing (1) comprising at least fifth metal reinforcing threads (86) that are arranged adjacently, whose main direction is not parallel to the reference axis, situated at least partly in the crown (82), delineated by two free edges, said radiofrequency transponder (100, 100bis), situated axially between said two free edges, is radially spaced from the at least fifth reinforcing threads (86) by at least 5 mm.

9. Tyre casing (1) according to any one of the preceding claims, wherein the radiofrequency transponder (100, 100bis) is encapsulated in at least one electrically insulating encapsulating rubber mass.

10. Tyre casing (1) according to Claim 9, wherein the elastic modulus of the encapsulating rubber mass is lower than or equal to the elastic modulus of the adjacent rubber blends.

11. Tyre casing (1) according to either of Claims 9 and 10, wherein the relative dielectric constant of the encapsulating rubber mass is lower than the relative dielectric constant of the adjacent rubber blends.

12. Tyre casing (1) according to any one of the preceding claims, wherein the radiofrequency transponder (100, 100bis) additionally comprises one or more passive or active electronic components.
